# EUROPÄISCHE PATENTSCHRIFT

(11) **EP 1 772 728 B1**
(45) Veröffentlichungstag und Bekanntmachung des Hinweises auf die Patenterteilung: **15.01.2014**
(21) Anmeldenummer: 06020924.4
(22) Anmeldetag: 05.10.2006
(51) Int. Cl.: G01N 27/00, G01N 33/487, G01N 27/416

(54) **Verfahren und System zum Überprüfen von elektrochemischen Sensoren**
Method and system for testing electrochemical sensors
Procédé et système destinés à la surveillance de capteurs électrochimiques

(30) Priorität: 05.10.2005 EP 05021853
(43) Veröffentlichungstag der Anmeldung: 11.04.2007
(73) Patentinhaber: Roche Diagnostics GmbH, 68305 Mannheim (DE); F.Hoffmann-La Roche AG, 4070 Basel (CH)
(72) Erfinder: Dreibholz, Joerg, 67122 Altrip (DE); Saecker, Sylvia, 64625 Bensheim (DE); Unkrig, Volker, 68526 Ladenburg (DE)

(56) Entgegenhaltungen:
- EP-A- 1 443 322
- EP-A- 1 455 182
- WO-A-01/75438
- WO-A-93/08477
- WO-A-2005/078437
- US-A- 4 822 456
- US-A- 5 352 351
- US-A- 6 088 608
- US-B1- 6 733 655

## Beschreibung

Die Erfindung betrifft ein Verfahren und ein entsprechendes System zum Überprüfen von Abweichungen der Geometrie der Detektionszone in einer Messkammer eines elektrochemischen Testträgers mit zumindest drei Elektroden.

Die Erfindung betrifft insbesondere diagnostische Systeme zur Untersuchung von Körperflüssigkeiten wie Vollblut, Plasmen, Serum, Urin etc., die zur Aufnahme der zu untersuchenden Probe Testträger (wie Teststreifen, Kassetten, etc.) verwenden. Derartige Testträger haben üblicherweise eine Probenauftragsstelle und eine davon räumlich getrennte Messkammer. Der Aufbau der Testträger muss sicherstellen, dass der Transport der Probe von der Probenauftragsstelle zur Messkammer gewährleistet und letztere ausreichend mit Probenflüssigkeit gefüllt ist. Für diesen Flüssigkeitstransport können zum Beispiel Kapillaren benutzt werden, wie sie z. B. in WO 03/095092 oder WO 2004/113917 beschrieben sind.

Die Messkammer beinhaltet eine Detektionszone, die eine definierte Geometrie und eine definierte Fläche besitzt. Abweichungen in den Abmessungen führen zu Abweichungen im Messergebnis.

Bei der Herstellung der Testträger werden in der Regel Plastikmaterialien, wie Folien oder Spritzgussteile, verwendet, die eine kostengünstige Fertigung ermöglichen. Diese Plastikmaterialien müssen durch Klebe-, Schweiß- oder Spritzgussverfahren während der Fertigung miteinander verbunden werden.

Dabei besteht die Gefahr, dass die Geometrie der Detektionszone in der Messkammer für einzelne Testträger von den Vorgaben abweicht. Diese Abweichungen können bei der Herstellung auftreten, zum Beispiel durch in die Messkammer bei der Fertigung austretenden Klebstoff oder von den Vorgaben abweichende Verschweiß- oder Verklebebedingungen. Es ist aber auch möglich, dass Testträger nach der Fertigung durch mechanische oder thermische Belastung verformt werden und sich dabei die Detektionsfläche in der Messkammer ändert. Außerdem ist es denkbar, dass die Elektrodenfläche selbst nicht in den vorgesehenen geometrischen Abmessungen gefertigt wurde oder durch nachträgliche Beschädigung verändert wurde.

Schließlich kann durch unvollständige Befüllung mit Probenflüssigkeit, den Einschluss von Luftblasen in die Probenflüssigkeit oder undichte Messkammer die Detektionsfläche verändert werden.

US 6,733,655 (Davies et al.) schlägt zur Überprüfung von mittels Gleichspannung betriebenen elektrochemischen Blutglucosesensoren auf Herstellfehler oder auf ungenügende Bedeckung der Elektroden mit Probe vor, auf einem Teststreifen zwei unabhängige Arbeitselektroden vorzusehen, die zusammen mit einer gemeinsam genutzten Referenzelektrode zwei Sensoren ergeben. Die beiden Sensorteile werden hinsichtlich der Substanzkonzentration in der Probe vermessen (bei Glucosesensoren wird also zweimal parallel der Glucosegehalt der Probe gemessen) und die beiden Messwerte miteinander verglichen. Sind beide Messwerte gleich, geht man davon aus, dass der Sensor prinzipiell in Ordnung ist. Bei deutlich unterschiedlichen Messwerten ist von einem Fehler auszugehen.

Nachteilig an diesem Verfahren ist, dass das eigentliche Messverfahren als Kontrolle herangezogen wird. Gerade bei langwierigen Messungen (z. B. im Bereich der Gerinnungsdiagnostik) vergeht so unter Umständen längere Zeit, bis feststeht, ob ein Sensor in Ordnung ist oder nicht. Fehler in Teilen des Messaufbaus, die für beide Sensorkanäle identisch sind (z. B. Kratzer in der Referenzelektrode o. ä.) werden nicht erkannt, da sie sich gleichermaßen auf beide Kanäle auswirken.

US 5,352,351 (White et al.) beschreibt Verfahren zur Bestimmung der Deckung der Messfläche durch Probenflüssigkeit in elektrochemischen Blutglucosesensoren und zur Überwachung des Messverlaufs. Dazu werden die Elektroden von entsprechenden Sensoren mit diskreten, aber zeitlich unterschiedlichen Gleichspannungen beaufschlagt und Rückschlüsse aus den gemessenen Strömen gezogen.

Das Verfahren gemäß US 5,352,351 weist prinzipiell die gleichen Nachteile auf, die auch US 6,733,655 besitzt.

Im Stand der Technik mangelt es an Verfahren, mit deren Hilfe es möglich ist, die oben genannten Probleme zuverlässig zu erkennen und so Fehlmessungen zu vermeiden bzw. als solche zu kennzeichnen.

Aufgabe der vorliegenden Erfindung ist es, die Nachteile des Standes der Technik zu beseitigen. Insbesondere ist es die Aufgabe der vorliegenden Erfindung, ein Verfahren und ein System bereitzustellen, mit deren Hilfe fehlerhafte Elektroden bzw. Messbedingungen bei elektrochemischen Sensorsystemen zuverlässig erkannt werden können.

Die Aufgabe wird durch den Gegenstand der Erfindung gelöst.

Gegenstand der Erfindung ist ein Verfahren gemäß Anspruch 1 sowie ein dazugehöriges System aus Messgerät und elektrochemischen Testträger gemäß Anspruch 7. Vorteilhafte Ausgestaltungen der Erfindung sind Gegenstand der abhängigen Ansprüche.

Erster Gegenstand der Erfindung ist ein Verfahren zum Überprüfen der elektrochemisch aktiven Fläche von elektrochemischen Sensoren mit zumindest drei Elektroden. Das Verfahren wird vorteilhaft dazu eingesetzt, Abweichungen der aktiven Elektrodenfläche der Sensorelektroden von vorgegebenen Werten festzustellen. Erfindungsgemäß wird hierzu zunächst dem Sensor ein flüssiges Messmedium zugeführt und ein erster Scheinleitwert (Admittanz) zwischen zwei Elektroden (die als erstes Elektrodenpaar bezeichnet werden sollen) bestimmt. Gleichzeitig oder nachfolgend wird ein zweiter Scheinleitwert zwischen zwei Elektroden (die als zweites Elektrodenpaar bezeichnet werden sollen) des Sensors bestimmt wird. Je nach genauer Ausgestaltung des erfindungsgemäßen Verfahrens kann eine der zweiten Elektroden mit einer der ersten Elektroden identisch sein oder die zwei Elektrodenpaare haben keine gemeinsame Elektrode. Der erste und der zweite Scheinleitwert werden schließlich zueinander in Beziehung gesetzt. Erfindungsgemäß wird aus den beiden Scheinleitwerten ein Verhältnis gebildet, d. h. einer der Scheinleitwerte wird durch den anderen dividiert und das so erhaltene Verhältnis wird als Maß für die nachfolgende Bewertung herangezogen.

Als flüssiges Messmedium kann eine Probenflüssigkeit, z. B. eine Körperflüssigkeit wie Blut, Serum, Plasma, Speichel, Schweiß etc., eine (wässrige) Umweltprobe, Prozessflüssigkeit, etc. oder eine (wässrige) Kontroll- bzw. Kalibrationsflüssigkeit verwendet werden.

Für das erfindungsgemäße Verfahren ist es prinzipiell unerheblich, welche Gestalt der zu messende Sensor hat. Der Sensor kann dabei jede beliebige, dem Fachmann an sich bekannte Gestalt aufweisen. Beispielsweise kann der Sensor einen freiliegenden, direkt mit dem Messmedium zu kontaktierenden Elektrodenbereich (analog dem Produkt AccuChek Advantage von Roche Diagnostics) oder einen Kapillarspalt/-kanal über dem Elektrodenbereich aufweisen (analog dem Produkt AccuChek Aviva oder AccuChek Comfort Curve von Roche Diagnostics). Es ist auch möglich, Sensoren für Durchflussmesszellen, die einen Probenkanal über dem Elektrodenbereich aufweisen (analog beispielsweise dem Produkt Roche Omni S von Roche Diagnostics) zu verwenden. Allen Sensoren ist jedoch gemeinsam, dass die elektrochemisch aktive Fläche der Elektroden des Sensors durch die Gestalt der Elektroden und ein Dielektrikum (z. B. in Form einer Abdeckung, eines Spacers oder eines Kanals) bestimmt wird. Die einzelnen Elektroden des Sensors können aus identischen oder unterschiedlichen Materialien gefertigt sein, wobei das Material als solches ebenfalls - im Rahmen dessen, was ein Fachmann auf dem Gebiet der elektrochemischen (Bio-)Sensoren verwenden würde - nicht erfindungswesentlich ist und beliebig gewählt werden kann.

Erfindungsgemäß wird zur Überprüfung der elektrochemischen Sensoren die Leitfähigkeit mittels Wechselstrom, d.h. der Scheinleitwert oder die Admittanz, ermittelt. Bevorzugt wird erfindungsgemäß die mittels hochfrequenter, niedervoltiger Wechselspannung ermittelte Admittanz verwendet. Als besonders bevorzugt hat sich eine Wechselspannungsfrequenz im Bereich einiger Kilohertz, ganz bevorzugt im Bereich von 10 kHz herausgestellt. Die Wechselspannung sollte vorzugsweise im Bereich einiger mVᵣₘₛ, insbesondere bei 8 mVᵣₘₛ liegen.

Vorzugsweise erfolgt beim erfindungsgemäßen Verfahren anschließend an die Bewertung der Leitfähigkeitsmesswerte die Ausgabe des Ergebnisses der Überprüfung, insbesondere, wenn die Überprüfung ein von Sollzustand (Sollwert oder Sollbereich) abweichendes Resultat liefert. Typischerweise wird das Ergebnis mittels einer visuell erkennbaren Anzeigeeinheit (z. B. Lampe, Leuchtdiode, Display, über einen Drucker) angezeigt. Es ist jedoch auch möglich, im Falle einer Abweichung von Sollzustand ein akustisches Signal (z. B. über einen Summer oder Lautsprecher) oder ein fühlbares Signal (Vibrieren) auszugeben. Typischerweise wird hierbei zumindest eine Abweichung vom Sollzustand (d. h. eine Fehlermeldung) ausgegeben. Es ist jedoch auch möglich, ein Signal beim Erreichen des Sollzustands auszugeben. Außerdem ist es möglich, Messwerte, die mit Sensoren gemessen wurden, deren Prüfergebnisse außerhalb des Sollbereiches lagen, zu kennzeichnen, z. B. bei deren Anzeige, Ausdruck oder Speicherung. Man spricht davon, dass solche Werte entsprechend "geflagt" werden.

Ein weiterer Gegenstand der Erfindung ist ein System aus einem elektrochemischen Testträger mit zumindest drei Elektroden und einem Messgerät, das zum Ausführen des erfindungsgemäßen Verfahrens geeignet ist. Das Messgerät enthält dabei zumindest eine Wechselspannungsquelle, Kontakte zum Anschluss von Elektroden eines Sensor, eine Steuer- und Messelektronik zum Erzeugen der Prüfspannungen und Erfassen der Sensorsignale, zumindest einen Prozessor zum Vergleichen und Inbeziehungsetzen der Sensorsignale anhand eines Programms zur Ausführung des erfindungsgemäßen Verfahrens und eine Ausgabeeinheit (Display, Datenschnittstelle, Druckeranschluss o. ä.).

Die vorliegende Erfindung beschreibt unter anderem eine Methode, die die Feststellung von Abweichungen in der Fläche der Detektionszone ermöglicht und damit die Erhebung von fehlerhaften Messwerten aus den beschriebenen Gründen verhindert.

Die erfindungsgemäße Lösung des oben beschriebenen Problems basiert vorzugsweise auf der Integration von 2 Sets Elektroden in die Messkammer eines elektrochemischen Sensors. Jedes Set von Elektroden besteht aus 2 Elektroden. Dabei kann eine Elektrode Bestandteil von beiden Sets sein.

Zwischen den 2 Elektroden eines Sets wird, nach der Befüllung der Messkammer mit einem Messmedium, v. a. einer Probenflüssigkeit, eine Wechselspannung angelegt und die Leitfähigkeit (Scheinleitwert, Admittanz) über die Probe gemessen. Dabei wird zuerst die Leitfähigkeit zwischen einem Elektrodenpaar und danach, also zeitlich versetzt, die Leitfähigkeit zwischen dem zweiten Elektrodenpaar gemessen.

Die Elektroden sind so ausgelegt, dass eine Veränderung der Geometrie der Messkammer oder der Elektrodengeometrie die Größe der vom Messmedium benetzten Elektrodenfläche und damit die Höhe der gemessenen Leitfähigkeit verändert. Da die Leitfähigkeit nicht nur von der Geometrie der Elektroden, sondern auch von der Ionenkonzentration des Messmediums, der Temperatur etc. abhängt, ist eine Bewertung der Messkammergüte durch die Auswertung der gemessenen absoluten Leitfähigkeitswerte schwierig. Bildet man jedoch das Verhältnis der Leitfähigkeiten, die mit beiden Sets von Elektroden gemessen wurden, so ist eine Normierung auf die geometrischen Parameter möglich.

Durch den Einbau einer Wartezeit zwischen den beiden Messungen kann man auch Veränderungen der benetzten Fläche detektieren. Werden die Elektrodenflächen zum Beispiel durch einen aufgeklebten Spacer begrenzt, ist bei nicht sachgerechter Verklebung eine Unterwanderung des Spacers durch Probenflüssigkeit möglich. Durch Messung der Leitfähigkeit zu unterschiedlichen Zeiten kann man diese, in der Regel langsame, Vergrößerung der benetzten Elektrodenfläche messen.

Das erfindungsgemäße Verfahren ermöglicht es zudem, zuverlässig die Verwendung gealterter oder beschädigter Systemkomponenten zu verhindern. Beispielsweise werden so genannte "parasitäre Widerstände" (engl.: parasitic contact resistance) erfasst, die durch Übergangswiderstände zwischen Teststreifen und Stecker im Messgerät entstehen, wenn z. B. die Kontakte gealtert oder die Streifen verkratzt sind.

Die Erfindung wird anhand der nachfolgenden Beispiele und Figuren näher erläutert. Obwohl die Beispiele die Erfindung lediglich anhand von Gerinnungssensoren erläutern, kann das erfindungsgemäße Prinzip auf jegliche Art von elektrochemischen Sensoren, beispielsweise Enzymsensoren zur Bestimmung von Metaboliten wie Glukose oder Laktat aus Blutproben, ohne weiteres übertragen werden.

Gegenüber der Messung der Gleichspannungs-Leitfähigkeit (Leitwert) hat das erfindungsgemäße Verfahren und das dazugehörige System den Vorteil, dass das Signal unabhängig von einer elektrochemisch detektierbaren Spezies ist, die Mechanismen und Systemkomponenten für eine Hämatokritbestimmung, die ebenfalls auf der Basis der Wechselspannungsleitfähigkeit beruht, mit überprüft werden und so genannte "parasitäre Widerstände" erfasst werden können.
Figur 1 zeigt eine typische Ausführungsform der Elektrodenstrukturen und des Aufbaus eines elektrochemischen Sensors (Teststreifen), anhand dessen das erfindungsgemäße Verfahren erläutert werden kann.
Figur 2 zeigt grafisch den Zusammenhang zwischen der relativen Abweichung des Messergebnisses eines elektrochemischen Blutgerinnungssensors vom Sollwert (rel. Δ. in %; γ-Achse) aufgetragen gegen den Quotienten aus zwei Admittanz-Messungen (Ad2/Ad1; so genannte "Failsafe-Admittance"; x-Achse).
Figur 3 zeigt die Strom-/Zeitkurven (Strom I in Ampere [A] gegen Messzeit t in Sekunden [s]) für 7 Blutgerinnungsmessungen mit 7 unterschiedlichen Sensoren und jeweils der selben Probe.
Figur 4 zeigt die Strom-/Zeitkurven (Strom I in Ampere [A] gegen Messzeit t in Sekunden [s]) für 3 Blutgerinnungsmessungen mit 3 unterschiedlichen Sensoren und jeweils der gleichen Probe.
Figur 5 zeigt eine Gegenüberstellung der sog. "Failsafe-Admittance" (Ad2/Ad1, y-Achse) in Abhängigkeit vom Übergangswiderstand R (in Ohm) zwischen Stecker (im Messgerät) und Elektrodenkontakt (auf einem Teststreifen).
Figur 6 zeigt die relative Abweichung der Gerinnungszeiten (Δ in %) in Abhängigkeit von den Übergangswiderständen R (in Ohm) zwischen Stecker (im Messgerät) und Elektrodenkontakt (auf einem Teststreifen).

Die Ziffern und Abkürzungen in den Figuren bedeuten:
- 1: Elektrochemischer Sensor
- 2: Basisfolie
- 3: 1. Elektrode
- 4: 2. Elektrode
- 5: 3. Elektrode
- 6: Reagenzschicht
- 7: Abstandhalter (Spacer)
- 8: Deckelfolie
- 9: Entlüftungsöffnung
- 10: Aussparung
- Ad1: Admittanz 1
- Ad2: Admittanz 2
- Δ: Relative Abweichung der gemessenen Gerinnungszeit vom Sollwert (in %)
- ***I***: Strom (in Ampere A)
- *R*: Übergangswiderstand (in Ohm)
- ***t***: Messzeit (in Sekunden s)
- A: Ampere
- s: Sekunde(n)

### Beispiele

### Beispiel 1: Aufbau eines typischen elektrochemischen Sensors

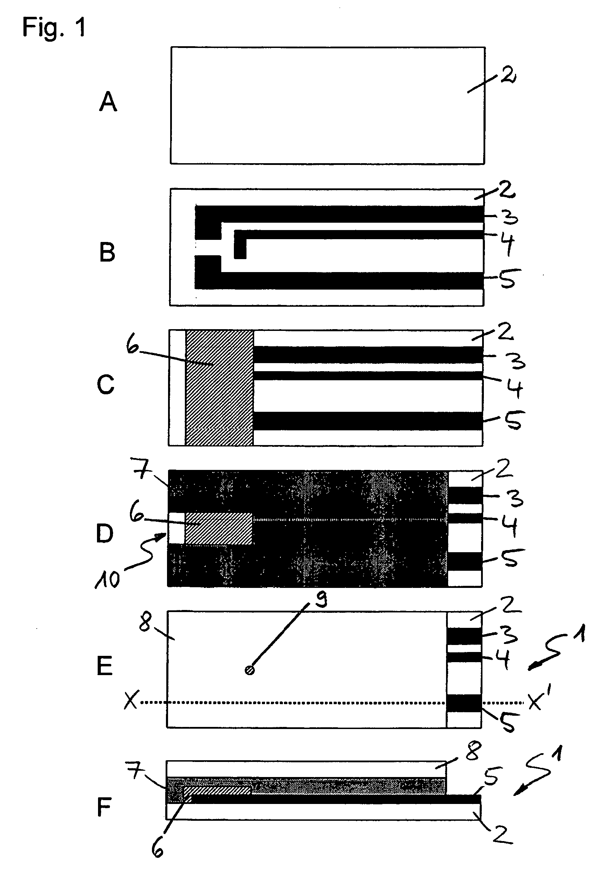

Figur 1 zeigt schematisch die Elektrodenstrukturen und den Aufbau eines elektrochemischen Sensors. Typische Sensoren solcher Art sind auch aus WO 03/095092 und WO 2004/113917 bekannt. Figur 1 zeigt dabei in 6 Teilfiguren (A bis F) den Aufbau eines typischen elektrochemischen Sensors.

Der elektrochemische Sensor 1 besteht aus einer Basisfolie 2, auf die zunächst die Elektroden 3, 4, 5 aufgebracht werden. Typischerweise werden die Elektroden 3, 4, 5 gedruckt, aufgeklebt oder durch Sputtern erzeugt. Es ist auch möglich, die Folie 2 zunächst vollflächig zu metallisieren (z. B. durch Sputtern oder CVD) und anschließend die Elektrodenstrukturen mittels Laserablation oder lithographischer Verfahren herauszuarbeiten. Die Elektroden und Leiterbahnen können aus den gleichen oder unterschiedlichen Materialien bestehen. Typischerweise bestehen die Elektroden und Leiterbahnen aus einem Edelmetall, wie z. B. Gold, Platin, Palladium o. ä., oder Legierungen oder anderen inerten Materialien.

Auf die Elektroden 3, 4, 5 wird in dem Bereich, in dem die Probe aufgenommen werden soll, eine Reagenzschicht 6 aufgebracht, beispielsweise durch Drucken, Dispensieren, Aufrakeln, Schlitzdüsenbeschichtung o. ä., und getrocknet. Die Reagenzzusammensetzung richtet sich im Wesentlichen nach dem zu messenden Analyten bzw. zu bestimmenden Probenparameter und kann vom Fachmann entsprechend ausgesucht bzw. hergestellt werden.

Nach dem Trocknen der Reagenzschicht wird auf die Basisfolie 2, die Elektroden 3, 4, 5 und die Reagenzschicht 6 ein Abstandhalter (Spacer) 7 aufgebracht, der aus einem dielektrischen Material besteht. Der Spacer 7 bedeckt dabei diejenigen Teile der Elektroden, die nicht mit Probe in Kontakt kommen sollen, und lässt diejenigen Teile der Elektroden frei, die mit Probe in Kontakt kommen sollen. Hierfür weist er im Bereich der Reagenzschicht 6 eine Aussparung 10 auf. Diese Aussparung definiert zusammen mit den Elektrodenstrukturen im Reagenzbereich die tatsächlich aktive Elektrodenfläche.

Am der Reagenzschicht 6 gegenüberliegenden Ende des Sensors 1 lässt der Spacer 7 ebenfalls Bereiche der Elektroden/Leiterbahnen 3, 4, 5 frei. Diese dienen der Kontaktierung des Sensors 1 im Messgerät (nicht gezeigt).

Der in Teilfigur D gezeigte Sensor 1 wäre im Prinzip dazu geeignet, Messungen in flüssigen Medien durchzuführen. Beispielsweise könnte Probenflüssigkeit von oben auf den freiliegenden Bereich der Reagenzschicht 6 aufgetropft werden.

Vorzugsweise enthalten elektrochemische Sensoren aus Gründen der Hygiene und der einfachen Probendosierung einen Kapillarspalt/Kapillarkanal. Dieser wird dadurch erzeugt, dass auf den Spacer 7 eine weitere dielektrische Folie (Deckelfolie 8) aufgebracht wird. Falls der Spacer wenige 100 µm oder weniger dick ist bildet sich so ein kapillaraktiver Spalt im Bereich der Aussparung 10. Probe kann nun von der linken Seite her durch Kapillarkräfte getrieben in den Sensor 1 aufgenommen werden. Die dabei verdrängte Luft kann über Öffnung 9 aus dem Spalt entweichen.

Der komplett montierte Sensor 1 aus Figur 1E ist in Figur 1F im Schnitt entlang der Linie X-X' dargestellt.

Die zwei Sets von Elektroden, die in den nachfolgenden Beispielen für das erfindungsgemäße Verfahren verwendet wurden, setzen sich wie folgt zusammen:
Set1: 1. Elektrode 3/2. Elektrode 4
Set 2: 2. Elektrode 4/3. Elektrode 5

Andererseits ist es auch möglich, die Signale von mehr als 3 Elektroden heranzuziehen, z. B. also je Elektrodenset 2 individuelle, unterschiedliche Elektroden zu benutzen.

### Beispiel 2: Typisches Verfahren zum Überprüfen elektrochemischer Sensoren

An das Elektroden-Set 1 aus Beispiel 1 wird für eine Dauer von 0,15 Sekunden eine Wechselspannung (8 mV; 10 kHz) angelegt und die Leitfähigkeit gemessen. Das ermittelte Signal wird als Admittanz 1 (Ad1) bezeichnet.

Nach einer Wartezeit von 1 Sekunde wird an das Elektroden-Set 2 aus Beispiel 1 für eine Dauer von 3 Sekunden eine Wechselspannung (8 mVᵣₘₛ; 10 kHz) angelegt und die Leitfähigkeit gemessen. Das ermittelte Signal wird als Admittanz 2 (Ad2) bezeichnet.

Als so genannte "Failsafe-Admittance"-Signale werden die Quotienten aus Admittanz 1 und Admittanz 2 (Ad2/Ad1) bestimmt.

### Beispiel 3: Detektion von defekten Gerinnungsteststreifen

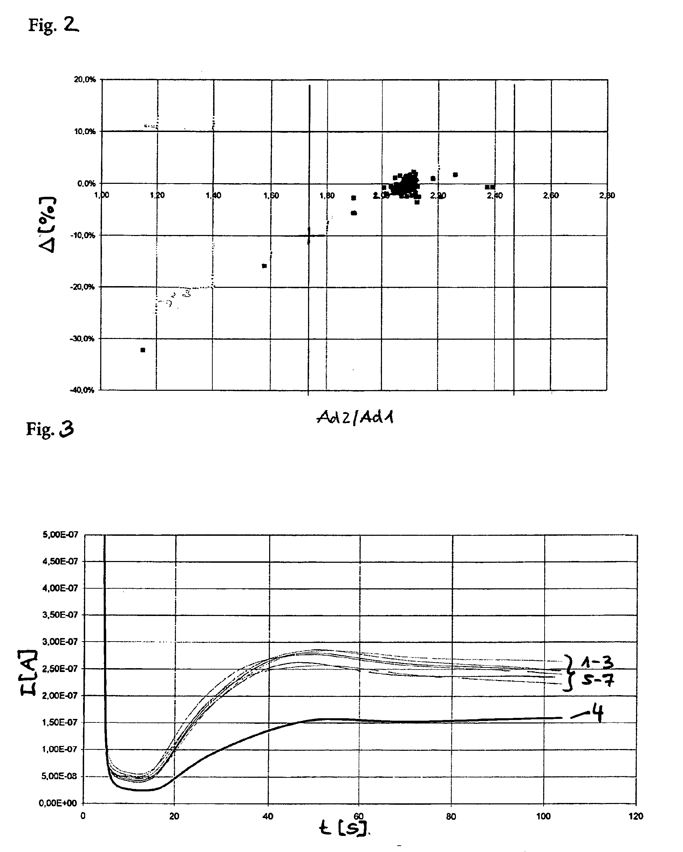

In Figur 2 ist der Parameter "Failsafe-Admittance" (Ad2/Ad1) für diverse Gerinnungsteststreifen des Beispiels 2 gegen die mit diesen Teststreifen gemessene Gerinnungszeit aufgetragen.

Für die "Failsafe-Admittance" wurde ein "Sollbereich" definiert (senkrechte durchgezogene Linien). Alle Teststreifen, deren "Failsafe-Admittance" innerhalb des Sollbereichs liegen, zeigen Gerinnungswerte in einem sehr engen Fenster (+/- 10 %; waagerechte durchgezogene Linien) um den Chargenmittelwert.

Alle Teststreifen, mit denen Gerinnungszeiten außerhalb des 10%-Fensters gemessen werden, werden als fehlerhaft erkannt, weil sie "Failsafe-Admittance"-Signale erzeugen, die außerhalb des "Failsafe-Admittance"-Sollbereichs liegen.

Die "Failsafe-Admittance"-Signale sind, wie in Beispiel 2 beschrieben, die Quotienten aus zwei Leitfähigkeitsmessungen (Admittanz 1 und Admittanz 2). Die Einzelwerte die der Darstellung in obiger Graphik zugrunde liegen, sind in Tabelle 1 exemplarisch für 5 Proben zusammengestellt.

**Tabelle 1: Vergleich der Admittanzverhältnisse für fünf exemplarische Teststreifen und der mit ihnen gemessenen Gerinnungswerte**

| Streifen | Probe* | Admittanz A [10⁻⁴] | | | Bewertung Admittanz | Gerinnungszeit [s] | | | Bewertung Gerinnungszeit |
|---|---|---|---|---|---|---|---|---|---|
| | | A1 | A2 | A2/A1 | | IST | SOLL | rel. Abweichung | |
| 1 | N1 | -3.93 | -4.52 | 1.151 | nicht OK | 8.60 | 12.69 | -32.2 % | nicht OK |
| 2 | N2 | -3.93 | -7.47 | 1,899 | OK | 11.61 | 12.30 | -5.6 % | OK |
| 3 | M1 | -3.92 | -6.19 | 1.579 | nicht OK | 21.07 | 25.04 | -15.8 % | nicht OK |
| 4 | M2 | -3.86 | -7.34 | 1.900 | OK | 24.37 | 25.04 | -2.7 % | OK |
| 5 | M3 | -3.93 | -8.57 | 2.182 | OK | 25.32 | 25.07 | 1.0 % | OK |

| | | | | | | | | | |
|---|---|---|---|---|---|---|---|---|---|
| * N 1, N 2: Normalspenderblute 1 und 2; M 1, M 2, M 3: Marcumarspenderblute 1, 2 und 3 | | | | | | | | | |

### Beispiel 4: Gerinnungsteststreifen mit zu kleiner Elektrodenfläche

Figur 3 zeigt Strom- / Zeitkurven, wie sie bei der Messung in einem elektrochemischen Gerinnungssensor aufgenommen werden. Dafür werden zwischen zwei Elektroden in der Messkammer des Streifen eine Gleichspannung angelegt und der Strom über die Zeit gemessen.

In den Versuchen 1 bis 3 und 5 bis 7 wurden intakte Teststreifen eingesetzt. In Versuch 4 wurde ein Teststreifen verwendet, dessen Arbeitelektrode eine zu kleine aktive Fläche (beispielsweise, weil die Elektroden mit Kleberresten verunreinigt waren oder, weil eine Luftblase über den Elektroden im Kapillarkanal festsaß) besaß. Für diesen Teststreifen wurden zu niedrige Ströme gemessen. Das resultiert in zu langen Gerinnungszeiten.

Wie Tabelle 2 zeigt, wird der Teststreifen, der eine zu kleine aktive Fläche an Arbeitselektrode aufwies, durch den Parameter "Failsafe Admittance" als fehlerhaft erkannt.

**Tabelle 2: Vergleich der Admittanzverhältnisse für 7 exemplarische Teststreifen und der mit ihnen gemessenen Gerinnungswerte**

| Streifen | Admittanz A [10⁻⁴] | | | Bewertung Admittanz | Gerinnungszeit [s] | | | Bewertung Gerinnungszeit |
|---|---|---|---|---|---|---|---|---|
| | A1 | A2 | A2/A1 | | IST | SOLL | rel. Abweichung | |
| 1 | 1.74 | 4.16 | 2.385 | OK | 16.8 | 16.8 | -0.4 % | OK |
| 2 | 1.84 | 4.35 | 2.369 | OK | 16.2 | 16.8 | -3.6 % | OK |
| 3 | 1.83 | 4.30 | 2.343 | OK | 16.7 | 16.8 | -0.7 % | OK |
| 4 | 1.78 | 2.20 | 1,234 | nicht OK | 19.9 | 16.8 | 15.4 % | nicht OK |
| 5 | 1.80 | 4.34 | 2.406 | OK | 16.8 | 16.8 | 0.1 % | OK |
| 6 | 1.76 | 4.18 | 2.379 | OK | 16.8 | 16.8 | -0.4 % | OK |
| 7 | 1.79 | 4.21 | 2.349 | OK | 17.5 | 16.8 | 4.0 % | OK |

### Beispiel 5: Gerinnungsteststreifen mit zu großer Elektrodenfläche

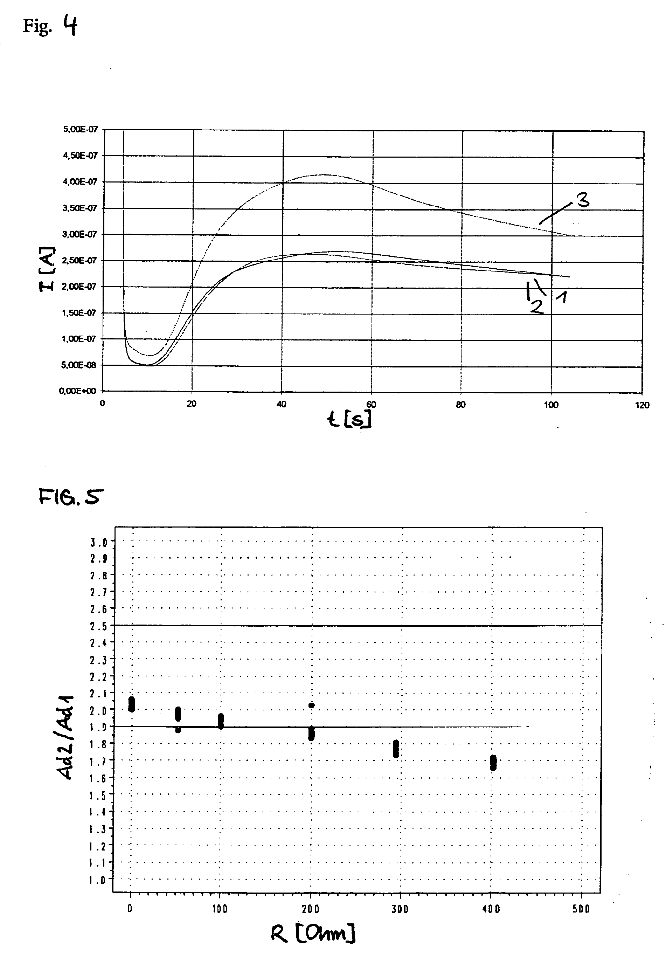

Figur 4 zeigt Strom- / Zeitkurven, die wie in Beispiel 3 beschrieben erzeugt wurden.

In den Versuchen 1 und 2 wurden intakte Teststreifen eingesetzt. In Versuch 3 wurde ein Teststreifen verwendet, dessen Arbeitelektrode eine zu große aktive Fläche besaß, wie es z.B. bei Unterwanderung eines Spacers, der die Arbeitselektrodengeometrie bestimmt, mit Probenflüssigkeit zu beobachten ist. Für diesen Teststreifen wurden zu hohe Ströme gemessen. Das resultiert in zu kurzen Gerinnungszeiten.

Wie Tabelle 3 zeigt, wird der Teststreifen, der eine zu große aktive Fläche an Arbeitselektrode aufwies, durch den Parameter "Failsafe Admittance" als fehlerhaft erkannt.

**Tabelle 3: Vergleich der Admittanzverhältnisse für 3 exemplarische Teststreifen und der mit ihnen gemessenen Gerinnungswerte**

| Streifen | Admittanz A [10⁻⁴] | | | Bewertung Admittanz | Gerinnungszeit [s] | | | Bewertung Gerinnungszeit |
|---|---|---|---|---|---|---|---|---|
| | A1 | A2 | A2/A1 | | IST | SOLL | rel. Abweichung | |
| 1 | 1.69 | 4.04 | 2.388 | OK | 17.2 | 17.0 | 1.0% | OK |
| 2 | 1.73 | 4.06 | 2.349 | OK | 16.9 | 17.0 | -0.9 | OK |
| 3 | 13.0 | 4.25 | 0.326 | nicht OK | 14.1 | 17.0 | -20.5 % | nicht OK |

### Beispiel 6: Einfluss parasitärer Widerstände

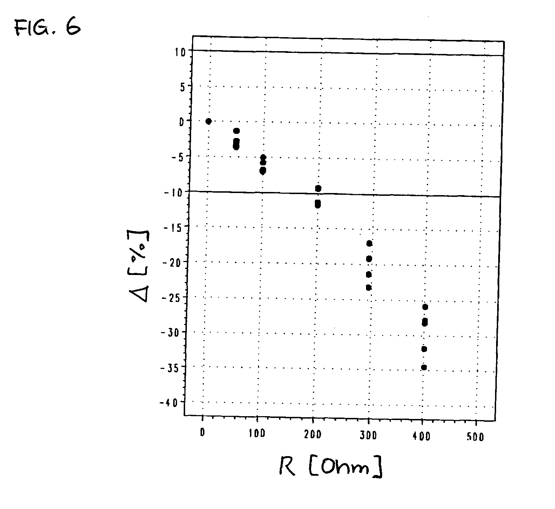

"Parasitäre Widerstände" (engl.: parasitic contact resistance), beispielsweise verursacht durch Übergangswiderstände zwischen Streifen und Stecker (Altern der Kontakte, Kratzer am Streifen), können über das erfindungsgemäße Verfahren erfasst und Fehlmessungen somit zuverlässig verhindert werden. Die Figuren 5 und 6 sowie Tabelle 4 belegen dies.

In Figur 5 ist der Parameter "Failsafe-Admittance" (Ad2/Ad1) für diverse Gerinnungsteststreifen des Beispiels 2 gegen die mit diesen Testsreifen und den dazugehörigen Messgeräten gemessenen Übergangswiderständen R (in Ohm) zwischen Stecker (im Messgerät) und Elektrodenkontakt (auf dem Teststreifen) dargestellt. Für die "Failsafe-Admittance" wurde ein "Sollbereich" definiert (waagrechte durchgezogene Linien).

Figur 6 zeigt die dazugehörige relative Abweichung der Gerinnungszeiten Δ (in %) in Abhängigkeit von den Übergangswiderständen R (in Ohm) (analog Figur 5). Die zulässige Toleranz der Gerinnungszeit beträgt hier ± 10 % (relative Abweichung) (durchgezogene waagrechte Linien).

Zu Figur 5 und 6 gehörige Messwerte sind exemplarisch in Tabelle 4 wiedergegeben.

| R [Ohm] | Admittanz A [10⁻⁴] | | | Bewertung Admittanz | Gerinnungszeit [s] | | | Bewertung Gerinnungszeit |
|---|---|---|---|---|---|---|---|---|
| | A1 | A2 | A2/A1 | | IST | SOLL | rel. Abweichung | |
| 0 | 2,90 | 5,88 | 2,03 | OK | 10,76 | 10,73 | 0,2% | OK |
| 51,8 | 2,88 | 5,74 | 1,99 | OK | 10,30 | 10,73 | -4,2% | OK |
| 100 | 2,88 | 5,65 | 1,96 | OK | 10,03 | 10,73 | -7,0 % | OK |
| 200 | 2,86 | 5,33 | 1,87 | nicht OK | 9,55 | 10,73 | -12,4 % | nicht OK |
| 294 | 2,90 | 5,17 | 1,78 | nicht OK | 8,61 | 10,73 | -24,7 % | nicht OK |
| 402 | 2,90 | 4,96 | 1,71 | nicht OK | 7,86 | 10,73 | -36,5 % | nicht OK |
| 0 | 2,96 | 5,96 | 2,01 | OK | 28,87 | 29,30 | -1,5 % | OK |
| 51,8 | 2,96 | 5,88 | 1,99 | OK | 28,44 | 29,30 | -3,0% | OK |
| 100 | 2,98 | 5,73 | 1,93 | OK | 27,54 | 29,30 | -6,4 % | OK |
| 200 | 2,93 | 5,43 | 1,85 | nicht OK | 25,70 | 29,30 | -14,0 % | nicht OK |
| 294 | 2,97 | 5,24 | 1,76 | nicht OK | 23,08 | 29,30 | -26,9 & | nicht OK |
| 402 | 3,01 | 5,00 | 1,66 | nicht OK | 19,92 | 29,30 | -47,1 % | nicht OK |

Die Daten von Beispiel 6 belegen, dass mit Hilfe des erfindungsgemäßen Verfahrens zuverlässig die Verwendung von schadhaften Teststreifen bzw. veralteten Steckern in Messgeräten ausgeschlossen werden kann.

## Patentansprüche

1. Verfahren zum Überprüfen von Abweichungen der Geometrie der Detektionszone in einer Messkammer eines elektrochemischen Testträgers mit zumindest drei Elektroden, wobei
i) dem elektrochemischen Testträger zunächst ein flüssiges Messmedium zugeführt wird;
ii) ein erster Scheinleitwert (Admittanz) zwischen zwei vom Messmedium benetzten Elektroden des elektrochemischen Testträgers bestimmt wird;
iii) ein zweiter Scheinleitwert (Admittanz) zwischen zwei vom Messmedium benetzten Elektroden des elektrochemischen Testträgers bestimmt wird, wobei eine der Elektroden in Schritt ii) mit einer der Elektroden in Schritt iii) identisch sein kann oder keine der Elektroden in Schritt ii) mit Elektroden in Schritt iii) identisch sein kann;
iv) der erste und der zweite Scheinleitwert zueinander durch Verhältnisbildung in Beziehung gesetzt werden und anschließend dieser durch Verhältnisbildung ermittelte Wert bewertet wird, indem dieser durch Verhältnisbildung ermittelte Wert mit einem Sollzustand verglichen wird.

2. Verfahren gemäß Anspruch 1, **dadurch gekennzeichnet, dass** im Schritt iv) festgestellt wird, ob eine Abweichungen der aktiven Elektrodenfläche von vorgegebenen Werten vorliegt.

3. Verfahren gemäß einem der Ansprüche 1 bis 2, **dadurch gekennzeichnet, dass** die elektrochemisch aktive Fläche der Elektroden des elektrochemischen Testträgers durch die Gestalt der Elektroden und ein Dielektrikum bestimmt wird.

4. Verfahren gemäß einem der Ansprüche 1 bis 3, **dadurch gekennzeichnet, dass** der erste Scheinleitwert und der zweite Scheinleitwert simultan oder nacheinander gemessen werden.

5. Verfahren gemäß Anspruch 1, **dadurch gekennzeichnet, dass** die Scheinleitwerte mittels hochfrequenter, niedervoltiger Wechselspannung bestimmt werden.

6. Verfahren gemäß Anspruch 2, **dadurch gekennzeichnet, dass** bei Abweichungen der aktiven Elektrodenfläche von vorgegebenen Werten eine Fehlermeldung ausgegeben wird.

7. System zum Ausführen des Verfahrens gemäß einem der Ansprüche 1 bis 6, enthaltend ein Messgerät zum Ausführen des Verfahrens gemäß einem der Ansprüche 1 bis 6, wobei das Messgerät
- eine Wechselspannungsquelle;
- Kontakte zum Anschluss von Elektroden eines elektrochemischen Testträgers;
- Elektronik zum Erzeugen der Prüfspannungen und Erfassen der Signale des elektrochemischen Testträgers;
- Prozessor zum Vergleich und Inbeziehungsetzen der Sensorsignale anhand eines Programms zur Ausführung des Verfahrens gemäß einem der Ansprüche 1 bis 6; und
- eine Ausgabeeinheit
enthält;
sowie mindestens einen elektrochemischen Testträger mit zumindest drei Elektroden.

## Claims

1. Method for examining deviations in the geometry of the detection zone in a measuring chamber of an electrochemical test carrier having at least three electrodes, wherein
i) the electrochemical test carrier is firstly supplied with a liquid measuring medium;
ii) a first admittance between two electrodes of the electrochemical test carrier wetted by the measuring medium is determined;
iii) a second admittance between two electrodes of the electrochemical test carrier wetted by the measuring medium is determined, wherein one of the electrodes in step ii) can be identical to one of the electrodes in step iii) or none of the electrodes in step ii) can be identical to electrodes in step iii)
iv) the first and the second admittance are related to one another by determining the ratio and subsequently this value determined by ratio formation is evaluated by comparing this value determined by ratio formation with a target state.

2. Method according to claim 1, **characterized in that** in step iv) it is determined whether the active electrode area deviates from predetermined values.

3. Method according to one of the claims 1 to 2, **characterized in that** the electrochemically active area of the electrodes of the electrochemical test carrier is determined by the design of the electrodes and a dielectric.

4. Method according to one of the claims 1 to 3, **characterized in that** the first admittance and the second admittance are measured simultaneously or one after the other.

5. Method according to claim 1, **characterized in that** the admittances are determined by means of high frequency, low voltage alternating voltage.

6. Method according to claim 2, **characterized in that** an error message is displayed when the active electrode area deviates from predetermined values.

7. System for carrying out the method according to one of the claims 1 to 6, comprising a measuring device to carry out the method according to one of the claims 1 to 6, wherein the measuring device comprises
- an alternating voltage source;
- contacts to connect electrodes of an electrochemical test carrier;
- electronics to generate test voltages and detect the signals of the electrochemical test carrier;
- processor to compare and relate the sensor signals on the basis of a programme for carrying out the method according to one of the claims 1 to 6;
and
as well as at least one electrochemical test carrier having at least three electrodes.

## Revendications

1. Procédé destiné à la surveillance d'écarts de géométrie de la zone de détection dans une chambre de mesure d'un support de test électrochimique comportant au moins trois électrodes, dans lequel
i) un agent de mesure liquide est tout d'abord amené au support de test électrochimique ;
ii) une première conductance apparente (admittance) entre deux électrodes du support de test électrochimique qui ont été humidifiées par l'agent de mesure est déterminée ;
iii) une deuxième conductance apparente (admittance) entre deux électrodes du support de test électrochimique qui ont été humidifiées par l'agent de mesure est déterminée,
l'une des électrodes de l'étape ii) pouvant être identique à l'une des électrodes de l'étape iii) ou aucune des électrodes de l'étape ii) pouvant ne pas être identique aux électrodes de l'étape iii) ;
iv) la première et la deuxième conductance apparente sont en relation l'une avec l'autre par la constitution d'un rapport et ensuite cette valeur déterminée par la constitution d'un rapport est estimée en comparant cette valeur déterminée par la constitution d'un rapport avec un état théorique.

2. Procédé selon la revendication 1, **caractérisé en ce qu'**il est déterminé à l'étape iv) s'il y a un écart de la surface d'électrode active par rapport aux données prédéterminées.

3. Procédé selon l'une des revendications 1 à 2, **caractérisé en ce que** la surface électrochimiquement active des électrodes du support de test électrochimique est déterminée par la forme des électrodes et un diélectrique.

4. Procédé selon l'une des revendications 1 à 3, **caractérisé en ce que** la première conductance apparente et la deuxième conductance apparente sont mesurées simultanément ou l'une après l'autre.

5. Procédé selon la revendication 1, **caractérisé en ce que** les conductances apparentes sont déterminées au moyen d'une tension alternative faible et à haute fréquence.

6. Procédé selon la revendication 2, **caractérisé en ce qu'**en présence d'écarts de la surface d'électrode active par rapport aux données prédéterminées un message d'erreur est émis.

7. Système destiné à réaliser le procédé selon l'une des revendications 1 à 6, comprenant un appareil de mesure destiné à réaliser le procédé selon l'une des revendications 1 à 6, dans lequel l'appareil de mesure comprend
- une source de tension alternative ;
- des contacts destinés au raccordement d'électrodes d'un support de test électrochimique ;
- un dispositif électronique destiné à générer des tensions de surveillance et à acquérir les signaux du support de test électrochimique ;
- un processeur destiné à la comparaison et à la mise en relation des signaux de capteur à l'aide d'un programme destiné à réaliser le procédé selon l'une des revendications 1 à 6 ; et
- une unité d'émission ;
ainsi qu'au moins un support de test électrochimique comportant au moins trois électrodes.
